# EUROPEAN PATENT APPLICATION

(11) **EP 1 745 727 A1**
(43) Date of publication of application: **24.01.2007**
(21) Application number: 06425342.0
(22) Date of filing: 22.05.2006
(51) Int. Cl.: A47J 36/38

(54) **Universal lid for pots with condensate recovery**

(30) Priority: 21.07.2005 IT MO20050189
(71) Applicant: Mancini, Gaetano, Novi di Modena (IT)
(72) Inventor: Mancini, Gaetano, Novi di Modena (IT)

(57) **Abstract**

The found one has for object a lid that comprise a base of support at form of section spherical concave which can be in support on a vast range of pots.
Said base is linked to a superior part at form of section spherical convex which holds back the vapor, which come out from the holes, that are situated at the base of the section spherical concave, that contribute to canalize the condensed vapor caused by the cooking of the food, in the pot through the same holes.

## Description

The present invention pertains in a lid to be utilized on pots to cylindrical form, for the cooking of foods in general.

There are notoriously different types of lids for pots to cylindrical form such as: lids with and without holes for exit of the vapor caused by the cooking of the foods and fit lids to hold back in forced way the vapor, and accordingly, the pressure, which create itself inside the pots.

The lids of pots are usually being used without blowhole,so doing to create pressure into the pot and, accordingly, the lifting of the same lid with the spillage drawbacks of liquids. Are not of minor use the utilization of lids with blowhole, solving the problem of the pressure, but not the drawback of the vapor that, for the greatest part, goes lost and the rest goes to condense itself out by the lid and, accordingly, of the pot. In other systems of cookings of the foods, lids have been used to hold with strength the vapor in the pot, resolving so the problem of the pressure and of the vapor, but the request of a particular attention as it regards the safety, makes it become a product with the drawback of a not simple use. Besides, all these known types have a drawback in common: a lid can be in support only on a single and specific pot and not on others.

The principal aim some found present is that to obviate to the above-mentioned drawbacks , conceiving a type of universal lid, which can be in support on various measures of pots to cylindrical form and that it allows, consequently, a great versatility of use and a perfect cooking of the foods, recovering besides most of the condensed vapor. Not last purpose of the found one is that to obtain a product of easy and economic realization without the use of qualified manpower or with complex technologies, making so a product accessible to all those who utilize it.

These and other purposes are achieved by the lid, according to the found one, for the fact that is constituted in the inferior part by a base of support at form of section spherical concave with blowholes , and a superior part at form of section spherical convex, connected among them through some variable spacers. Further characteristics and advantages of the invention will especially be clear by the description of a form of preferred execution, but not exclusive of a lid, according to the found one, that it is illustrated to indicative title and not limited in the drawing unity in whose :

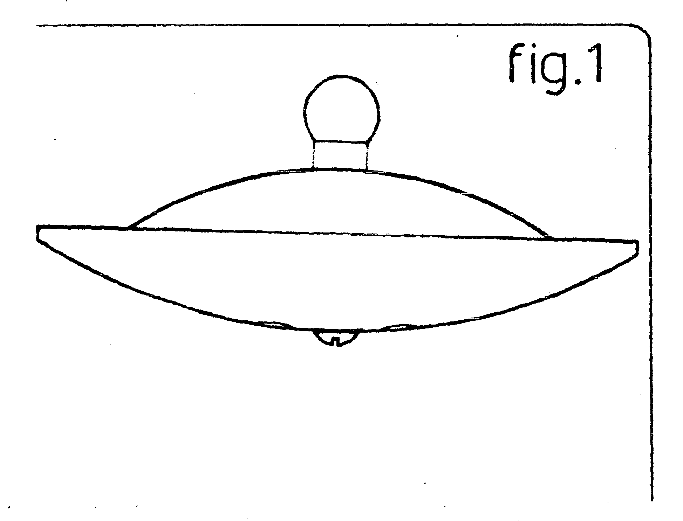

Fig. 1, are the lateral sight of the lid according to the found one;
Fig. 2, are a section of the lateral sight of the lid according to the found one, in position of detachment among the section spherical concave 1 and the section spherical convex 2;
Fig. 3, are a section of the lateral sight of the lid according to the found one, in position of union among the section spherical concave 1 and the section spherical convex 2, in support on sections of pots of different diameter (8, 8', 8'').

With reference to such figures the lid,according to the found one it is constituted by a section spherical concave 1, in tempered glass, with some blowholes disposed, on the fund 1(a), around at one central hole 1(b) for the arrangement of a screw 7, in material of steel,which blocks, interposing a gasket 6,in material of heat-resistant rubber, a cylinder 3, threaded in the inside part, in material of steel, where it slides easily a pivot 4, in material of steel, which sustains, interposing a gasket 6, a section spherical convex 2, in tempered glass, with in top a central hole 2(a), for the passage of the thin pivot 4(a), where is screwed a grip 5,in material plastic of the rigid type heat-resistant,blocking,consequently, the section spherical convex 2.

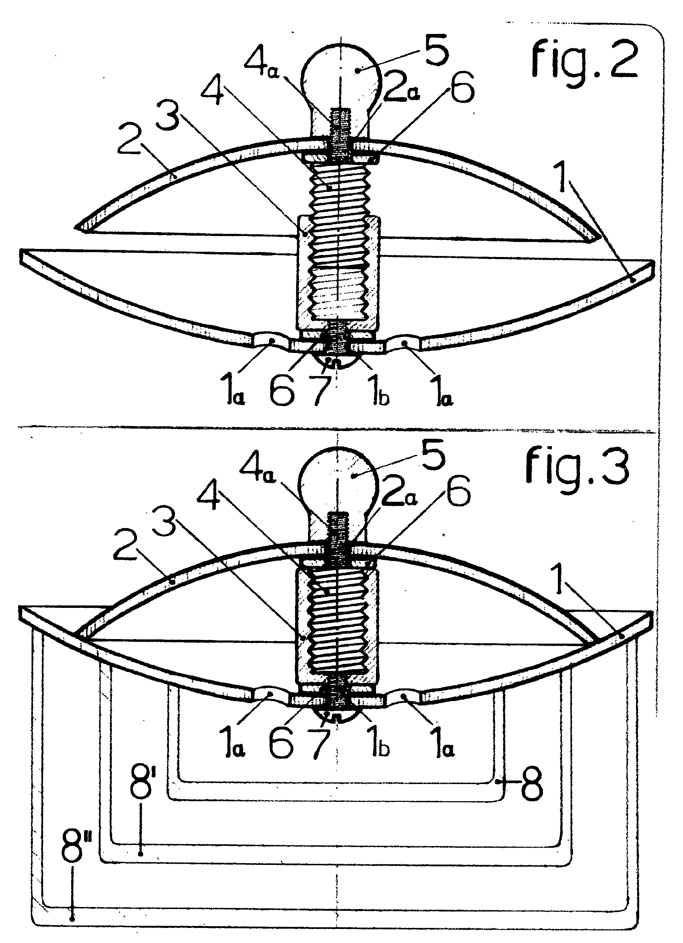

The functioning of the lid, according to the found one, it is the following: how it is clearly represented in fig.3, the base of the lid is composed from the section spherical concave 1, through which can be in support on varied pots of different diameter,like can be noticed by the sections 8, 8', 8''. The two holes 1(a), which are disposed on the fund of the section 1 allow the exit of the pressure and of the vapor from the pot generally caused by the cooking of the foods. The superior part of the lid is composed from the section spherical convex 2, are sustained by a pivot 4, that it is blocked from a grip 5, to which making her rotate in hourly sense or in sense counterclockwise, it allow the fluency of the pivot 4, indoors the cylinder 3, that it is blocked on the fund of the section 1, so from to bring near or to bring far the section 2,from the section 1, giving therefore the possibility to whom uses the lid of to vary , through the superior part , the pressure which develops itself inside the pot. The section 2, besides, has the function of to keep back the vapor, that come out from the holes 1(a), which at the clash with the vault of the spherical section 2, and creating, accordingly it condenses, which , through her heaviness goes to fall in the inside part of the spherical section 1, and being of oldest dimensions in comparison to the spherical section 2, it prevents the spillage of liquids at the of outside the pot, directing the condensed vapor, through its concave form, toward the centre, where the holes 1a allow at the condensation to deposit itself inside the pot, consenting so the recovery of most of condensed vapor.

The found one so as conceived it is susceptible of numerous modifications and variants, which are all included in the field of the inventive concept.
For example, the lid could be constituted only by the section spherical concave with or without blowhole, making use however of the advantages that, really through its form, the section concave spherical aforementioned can be in support on a great range of pots and containers of cylindrical form. Besides all the details are technically interchangeable with others in equivalent way.

## Claims

1. Universal lid with system of recovery it condenses **characterized** for the fact that it is constituted in the inferior part by a base of support at form of section spherical concave with blowholes, and a superior part at form of section convex spherical, connected among them through some variable spacers.

2. Lid according the claim 1 **characterized by** the section spherical concave, which it is preferable of biggest dimensions in comparison with the section spherical convex.

3. Lid according to the preceding claims and according to what is described and illustrated and for the specified purposes.
